# EUROPÄISCHE PATENTSCHRIFT

(11) **EP 1 498 313 B1**
(45) Veröffentlichungstag und Bekanntmachung des Hinweises auf die Patenterteilung: **18.07.2007**
(21) Anmeldenummer: 04014207.7
(22) Anmeldetag: 17.06.2004
(51) Int. Cl.: B60Q 1/48, B62D 15/02

(54) **Verfahren und Steuerung des Ein-/Ausparkens bei Kraftfahrzeugen und Einparkhilfe hierfür**
Procedure and control of the parking of motor vehicles and parking-aid device therefor
Procédure et commande du stationnement des véhicules automobiles et dispositif d'aide au stationnement pour cela

(30) Priorität: 17.07.2003 DE 10333417
(43) Veröffentlichungstag der Anmeldung: 19.01.2005
(73) Patentinhaber: Valeo Schalter und Sensoren GmbH, 74321 Bietigheim-Bissingen (DE)
(72) Erfinder: Gotzig, Heinrich, 74081 Heilbronn (DE); Jecker, Nicolas, 73728 Esslingen (DE); Schwarz-Massold, Brigitte, 71254 Ditzingen (DE)
(74) Vertreter: Dreiss, Fuhlendorf, Steimle & Becker

(56) Entgegenhaltungen:
- EP-A- 1 123 844
- DE-A1- 10 015 897

## Beschreibung

Die Erfindung betrifft ein Verfahren zur Steuerung des Ein-/Ausparkens bei Kraftfahrzeugen wie aus Dokument DE 10015897 nach dem Oberbegriff des Anspruchs 1 beschrieben IST sowie eine Einparkhilfe zur Durchführung dieses Verfahrens nach dem Oberbegriff des Anspruchs 7.

Eine gattungsgemäße Vorrichtung und ein gattungsgemäßes Verfahren sind beispielsweise aus den deutschen Offenlegungsschriften DE 19933732 und DE 19646559 bekannt.

Die aus diesen Druckschriften bekannten Vorrichtungen offenbaren eine elektronische Einparkhilfe für Kraftfahrzeuge, welche über an sich bekannte Abstandsmesseinrichtungen, wie beispielsweise Ultraschallsensoren oder Radarstrahlsensoren, die um das Kraftfahrzeug befindlichen Hindernisse erfasst und über eine entsprechende Anzeige dem Fahrer kenntlich macht.

Zusätzlich sind ein an sich bekannter Lenkwinkelsensor und ein elektronisches Steuer- bzw. Regelungssystem vorgesehen, das auf der Basis der erfassten Daten, des Lenkwinkels und der Koordinaten des Hindernisses, über die freie Parkfläche, die momentane Fahrzeugposition und den aktuellen Ist-Lenkwinkel einen Einparkvorgang in Form einer virtuellen Soll-Fahrspur errechnet und dem Lenker des Kraftfahrzeugs die erforderlichen Fahr- und Lenkmanöver, die notwendig werden, um den Ist-Lenkwinkel an einen Soll-Lenkwinkel anzupassen, welcher zur Erreichung der Soll-Fahrspur notwendig ist, vorgibt. Hierzu werden im Stand der Technik optische und/oder akustische Anzeigevorrichtungen herangezogen. So verwenden die auf dem Markt befindlichen Ein-/Ausparkhilfen beispielsweise zur Verdeutlichung des Abstandes des Kraftfahrzeuges zu einem Hindernis während des Einparkens eine definierte Signaltonfolge, deren Frequenz sich mit Verkürzung des Abstandes zwischen dem Kraftfahrzeug und dem Hindernis verändert.

Nachteil derart bekannter Einparkhilfen, bei welchen der Fahrer des Kraftfahrzeugs lediglich akustisch auf den Abstand des Kraftfahrzeugs zu einem Hindernis aufmerksam gemacht wird, ist, dass zum Beispiel bei einer Fahrt in Innenstadtbereichen, bei welcher vermehrt die Einparkhilfe zum Einsatz kommt, stets unter Umständen eine hohe Lärmbelastung vorliegt, sodass der Fahrer das akustische Signal der Einparkhilfe nicht oder nur mit Mühe wahrzunehmen vermag. Darüber hinaus gibt es immer Situationen, in denen ein akustisches Signal, unter Umständen frequenzabhängig, als störend empfunden wird.

Bei anderen bekannten Einparkhilfen wird dem Fahrer des Kraftfahrzeugs der Abstand bzw. eine drohende Kollision mit einem Hindernis über eine optische Anzeige, wie beispielsweise über den Monitor einer Navigationssystems vermittelt. Optisch arbeitende Anzeigevorrichtungen wiederum sind mit dem Nachteil behaftet, dass der Lenker des Fahrzeugs seine Aufmerksamkeit vermehrt auf die optische Anzeige richtet und nicht aus dem Fenster oder in die Spiegel blickt, was sich bei Einparkvorgängen als ungünstig erweisen kann.

Der Erfindung liegt nun die Aufgabe zugrunde, ein gattungsgemäßes Verfahren und eine gattungsgemäße Vorrichtung derart weiterzuentwickeln, damit sie für den Fahrzeuglenker einerseits komfortabler und andererseits einfacher zu bedienen wird, sodass eine bessere Einparkhilfe geschaffen wird. Um den Konstruktions- und Herstellungsaufwand gering zu halten, sollte dabei auf bereits im Fahrzeug vorhandene Anzeigemittel zurückgegriffen werden.

Erfindungsgemäß wird diese Aufgabe durch ein Verfahren zur Steuerung des Ein-/Ausparkens bei Kraftfahrzeugen gelöst, welches die Schritte aufweist:
- Erfassen eines Ist-Lenkwinkels;
- Detektieren von in einem Umfeld des Kraftfahrzeuges sich befindlichen Hindernissen;
- Berechnen einer Ist-Fahrspur des Kraftfahrzeuges auf der Basis des Ist-Lenkwinkels;
- Berechnen einer Soll-Fahrspur für das Kraftfahrzeug auf der Basis der detektierten Hindernisse;
- Ermitteln eines Soll-Lenkwinkels für die Soll-Fahrspur;
- Anzeigen eines tatsächlichen Unterschieds zwischen dem Ist-Lenkwinkel und dem Soll-Lenkwinkel zur Einleitung von erforderlichen Fahr- und Lenkmanövern zur Angleichung des Ist-Lenkwinkels auf den Soll-Lenkwinkel,
wobei das Fahren erfindungsgemäß dadurch gekennzeichnet ist, dass der Unterschied zwischen dem Ist-Lenkwinkel und dem Soll-Lenkwinkel optisch durch ein Blinken angezeigt wird, dessen Frequenz in Abhängigkeit der Größe des Unterschieds variiert wird.

Hat der Fahrzeuglenker den Ist-Lenkwinkel vollständig auf den Soll-Lenkwinkel zur Erreichung der Soll-Fahrspur für das Einparken durch eine entsprechende Nachlenkbewegung angeglichen, hört das Blinken auf, das heißt, die Anzeige leuchtet permanent oder ist dann ausgeschaltet.

Je nach ergonomischen Gesichtspunkten ist es gemäß der Erfindung einerseits denkbar, dass die Blinkfrequenz höher ist, je größer sich der Unterschied zwischen dem Ist-Lenkwinkel und dem Soll-Lenkwinkel darstellt, oder andererseits, dass die Blinkfrequenz langsamer wird, je größer der Unterschied zwischen dem Ist-Lenkwinkel und dem Soll-Lenkwinkel wird.

In einer besonders vorteilhaften Ausführung des erfindungsgemäßen Verfahrens wird das Blinken durch ein intermittierendes akustisches Signal unterstützt, dessen Frequenz mit der jeweils vorhandenen Blinkfrequenz korreliert wird, sodass der Fahrzeuglenker während des Einparkens nicht permanent die optische Anzeigevorrichtung im Blick haben muss, beispielsweise wenn er sich nach hinten umwendet, um den hinter dem Kraftfahrzeug befindlichen Bereich in Augenschein zu nehmen, und dabei durch das optische Signal unterstützt wird.

Die erfindungsgemäße Aufgabe wird ferner durch eine elektronische Einparkhilfe bzw. Ausparkhilfe für Kraftfahrzeuge gelöst, welche
- eine Einrichtung zur Erfassung des Ist-Lenkwinkels;
- eine Einrichtung zur Detektion von in einem Umfeld des Kraftfahrzeuges sich befindlichen Hindernissen;
- eine Regeleinrichtung zur Auswertung der erfassten Daten und zur Berechnung eines Soll-Lenkwinkels; und
- eine Anzeigeeinrichtung zum Anzeigen eines Unterschieds zwischen dem Ist-Lenkwinkel und dem Soll-Lenkwinkel aufweist,
wobei gemäß der Erfindung die Anzeigeeinrichtung durch einen bereits in dem Instrumentenfeld des Kraftfahrzeuges (Armaturenbrett) befindlichen Fahrtrichtungsanzeiger (Pfeile) gebildet wird, welcher den Unterschied zwischen dem Ist-Lenkwinkel und dem Soll-Lenkwinkel durch ein Blinken mit variierbarer Frequenz in Abhängigkeit des Unterschieds anzeigt.

Auf diese Weise wird bereits ein in dem Kraftfahrzeug vorhandenes Anzeigemittel herangezogen.

In einer besonders vorteilhaften Ausführungsform der Einparkhilfe gemäß der Erfindung zeigt der Fahrtrichtungsanzeiger das Blinken während des Einparkens in einer anderen Farbe, beispielsweise rot, an, als in der grünen Farbe, die herkömmlicherweise für eine Anzeige bei einem normalen Richtungswechsel während einer Fahrt des Kraftfahrzeuges Verwendung findet.

Die Blinkfrequenz soll sich hierbei stets innerhalb der gesetzlich vorgegebenen Frequenz (§ 54 StVZO - Fahrrichtungsanzeiger) von 1,0 bis 2,0 Hz bewegen.

Die Verwendung einer blinkenden Anzeige, insbesondere der im Instrumentenfeld befindlichen Fahrtrichtungsanzeiger, gestattet es dem Lenker während des Einparkens quasi über das "periphere Sehen" die notwendigen Informationen aufzunehmen, sodass er seine Aufmerksamkeit nicht ausschließlich auf die optische Anzeige richten muss und so aus der Windschutzscheibe oder in die Seitenspiegel bzw. den Rückspiegel blicken kann.

Die Erfindung wird nun aus der folgenden Beschreibung eines Ausführungsbeispiels anhand der beigefügten Abbildungen näher erklärt. Es zeigen:

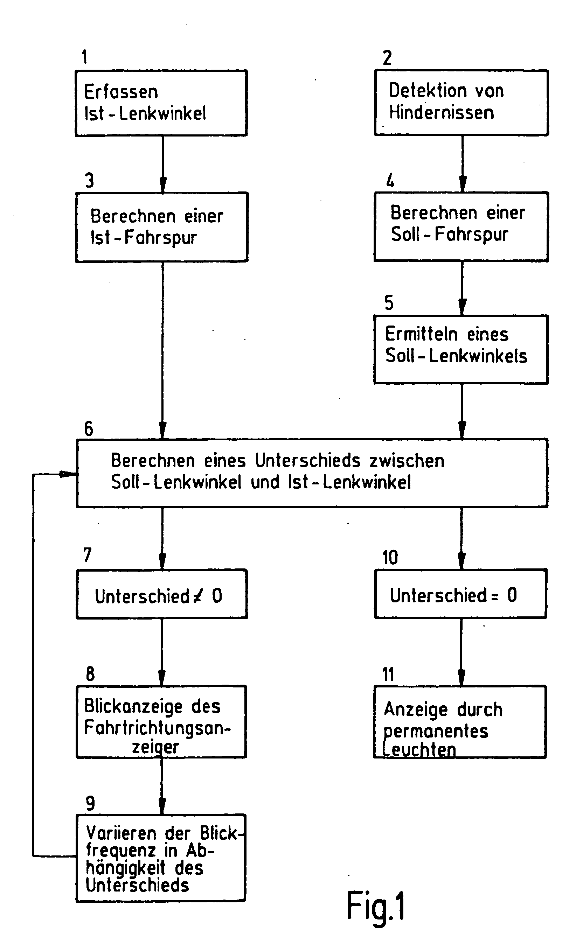

- Fig. 1: schematisch ein Blockdiagramm des erfindungsgemäßen Verfahrens; und
- Fig. 2: schematisch ein Instrumentenfeld eines Kraftfahrzeuges.

Zur Veranschaulichung des Prinzips des erfindungsgemäßen Verfahrens zur Steuerung des Ein- und Ausparkens ist ein Blockablaufdiagramm wiedergegeben.

Beim Einparken wird von einem Lenkwinkelsensor der Ist-Lenkwinkel permanent erfasst (Schritt 1). Gleichzeitig hierzu wird mittels bekannter Sensoren im Kraftfahrzeug das Umfeld abgetastet und eventuell in diesem Umfeld des Kraftfahrzeugs vorhandene Hindernisse detektiert (Schritt 2).

Aus dem erfassten Ist-Lenkwinkel wird eine Ist-Fahrspur mittels einer elektronischen Steuereinheit (Mikrocontroller) errechnet (Schritt 3). Gleichzeitig hierzu errechnet die elektronische Steuereinheit aus den Koordinaten der detektierten Hindernisse die Soll-Fahrspur (Schritt 4), die notwendig ist, um das Fahrzeug kollisionsfrei in den vorhandenen Einparkraum zu verfrachten.

Aus der Soll-Fahrspur wird dann der Soll-Lenkwinkel errechnet (Schritt 5).

In einem nachfolgenden Berechnungsschritt ermittelt die elektronische Steuereinheit den Unterschied zwischen dem Soll-Lenkwinkel und dem Ist-Lenkwinkel (Schritt 6).

Ist der Unterschied ≠ 0 (Schritt 7), wird dem Fahrzeuglenker dieser Unterschied durch ein Blinken des entsprechend der Richtung der Lenkbewegung zugeordneten Fahrtrichtungsanzeigers vermittelt (Schritt 8).

Die Blinkfrequenz des Fahrtrichtungsanzeigers variiert sich kontinuierlich im Laufe des Einparkprozesses in Abhängigkeit des sich durch ein weiteres Lenken des Lenkrads einstellenden Unterschieds zwischen dem Soll-Lenkwinkel und dem Ist-Lenkwinkel (Schritt 9).

Eine Feedback-Steuerung und Angleichung der Frequenz (Schritte 6, 7, 8 und 9) erfolgt so lange, bis der Unterschied zwischen dem Soll-Lenkwinkel und dem Ist-Lenkwinkel nicht mehr vorhanden ist (Schritt 10). Die Übereinstimmung zwischen den Lenkwinkeln wird dann beispielsweise durch ein permanentes Leuchten des Fahrtrichtungsanzeigers wiedergegeben (Schritt 11).

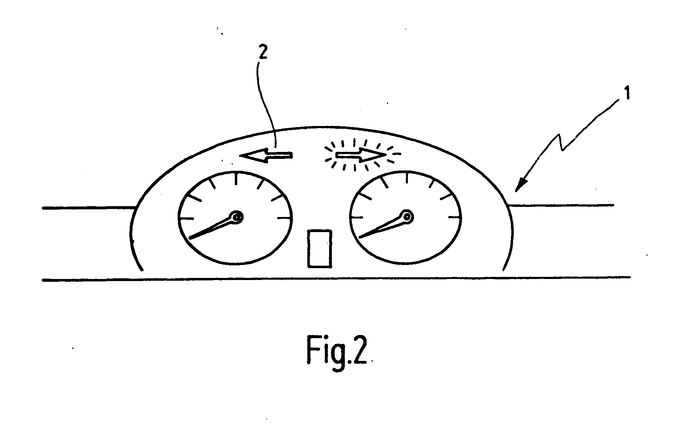

In Fig. 2 ist schematisch ein Instrumentenfeld 1 eines Kraftfahrzeuges angezeigt. In dem Instrumentenfeld 1 befinden sich neben den bekannten anderen Anzeigevorrichtungen für Drehzahl, Geschwindigkeit usw. auch die Fahrtrichtungsanzeiger in Form von Pfeilen 2. Dreht der Fahrzeuglenker im Zuge des Einparkens das Lenkrad beispielsweise nach rechts, so blinkt der rechte Pfeil 2 in einer Frequenz, die den Unterschied zwischen dem tatsächlichen Ist-Lenkwinkel und dem von der elektronischen Steuereinheit berechneten Soll-Lenkwinkel für einwandfreies Einparken angibt, bis durch entsprechendes "Nachlenken" ein vollständiges Angleichen erzielt wurde und ein Einparken des Kraftfahrzeuges möglich wird, ohne mit den Hindernissen um das Kraftfahrzeug zu kollidieren.

## Patentansprüche

1. Verfahren zur Steuerung des Ein-/Ausparkens bei Kraftfahrzeugen, aufweisend die Schritte:
- Erfassen eines Ist-Lenkwinkels;
- Detektieren von in einem Umfeld des Kraftfahrzeuges sich befindlichen Hindernissen;
- Berechnen einer Ist-Fahrspur des Kraftfahrzeuges auf der Basis des Ist-Lenkwinkels;
- Berechnen einer Soll-Fahrspur für das Kraftfahrzeug auf der Basis der detektierten Hindernisse;
- Ermitteln eines Soll-Lenkwinkels für die Soll-Fahrspur;
- Anzeigen eines tatsächlichen Unterschieds zwischen dem Ist-Lenkwinkel und dem Soll-Lenkwinkel zur Einleitung von erforderlichen Fahr- und Lenkmanövern zur Angleichung des Ist-Lenkwinkels auf den Soll-Lenkwinkel,
**dadurch gekennzeichnet, dass** der Unterschied zwischen dem Ist-Lenkwinkel und dem Soll-Lenkwinkel durch ein Blinken angezeigt
wird, dessen Frequenz in Abhängigkeit der Größe des Unterschieds variiert wird.

2. Verfahren nach Anspruch 1, **dadurch gekennzeichnet, dass** bei Übereinstimmung zwischen dem Ist-Lenkwinkel und dem Soll-Lenkwinkel kein Blinken mehr auftritt.

3. Verfahren nach Anspruch 1 oder 2, **dadurch gekennzeichnet, dass** sich die Blinkfrequenz erhöht, wenn sich der Unterschied zwischen dem Ist-Lenkwinkel und dem Soll-Lenkwinkel vergrößert.

4. Verfahren nach Anspruch 1 oder 2, **dadurch gekennzeichnet, dass** sich die Blinkfrequenz verkleinert, wenn sich der Unterschied zwischen dem Ist-Lenkwinkel und dem Soll-Lenkwinkel vergrößert.

5. Verfahren nach einem der vorhergehenden Ansprüche, **dadurch gekennzeichnet, dass** das Blinken durch ein intermittierendes akustisches Signal unterstützt wird.

6. Verfahren nach Anspruch 5, **dadurch gekennzeichnet, dass** die Frequenz des akustischen Signals mit der Blinkfrequenz korreliert ist.

7. Einparkhilfe für Kraftfahrzeuge, mit
- einer Einrichtung zur Erfassung des Ist-Lenkwinkels;
- einer Einrichtung zur Detektion von in einem Umfeld des Kraftfahrzeuges sich befindlichen Hindernissen;
- einer Regeleinrichtung zur Auswertung der erfassten Daten und zur Berechnung eines Soll-Lenkwinkels; und
- einer Anzeigeeinrichtung zum Anzeigen eines Unterschieds zwischen dem Ist-Lenkwinkel und dem Soll-Lenkwinkel,
**dadurch gekennzeichnet, dass** ein in dem Instrumentenfeld des Kraftfahrzeuges befindlicher Fahrtrichtungsanzeiger
den Unterschied durch Blinken in einer in Abhängigkeit des Unterschieds variierbaren Frequenz anzeigt.

8. Einparkhilfe nach Anspruch 7, **dadurch gekennzeichnet, dass** der Fahrtrichtungsanzeiger in einer anderen Farbe als die Farbe blinkt, welche bei einem normalen Richtungswechsel des Kraftfahrzeugs angezeigt wird.

9. Einparkhilfe nach Anspruch 7 oder 8, **dadurch gekennzeichnet, dass** der Fahrtrichtungsanzeiger mit einer Tongebereinrichtung gekoppelt ist.

## Claims

1. A method for controlling entering and leaving a parking space for motor vehicles, having the following steps:
- ascertaining an actual steering angle;
- detecting obstacles located in an area surrounding the vehicle;
- calculating an actual path of the vehicle on the basis of the actual steering angle;
- calculating a desired path for the vehicle on the basis of the obstacles detected;
- determining a desired steering angle for the desired path;
- displaying an actual difference between the actual steering angle and the desired steering angle for initiating required driving and steering maneuvers for adapting the actual steering angle to the desired steering angle,
**characterized in that** the difference between the actual steering angle and the desired steering angle is displayed by means of blinking, whose frequency is varied as a function of the magnitude of the difference.

2. The method as defined by claim 1, **characterized in that** upon agreement between the actual steering angle and the desired steering angle, blinking no longer occurs.

3. The method as defined by claim 1 or 2, **characterized in that** the blinking frequency increases if the difference between the actual steering angle and the desired steering angle increases.

4. The method as defined by claim 1 or 2, **characterized in that** the blinking frequency decreases if the difference between the actual steering angle and the desired steering angle increases.

5. The method as defined by one of the foregoing claims, **characterized in that** the blinking is reinforced by an intermittent acoustical signal.

6. The method as defined by claim 5, **characterized in that** the frequency of the acoustical signal is correlated with the blinking frequency.

7. Parking assistance for motor vehicles, having
- a device for ascertaining the actual steering angle;
- a device for detecting obstacles located in an area around the vehicle;
- a regulating device for evaluating the data ascertained and for calculating a desired steering angle; and
- an indicator for displaying a difference between the actual steering angle and the desired steering angle,
**characterized in that** a travel direction indicator located in the instrument panel of the vehicle displays the difference by blinking at a frequency that is variable as a function of the difference.

8. The parking assistance as defined by claim 7, **characterized in that** the travel direction indicator blinks in a different color from the color that is displayed upon a normal change of direction of the vehicle.

9. The parking assistance as defined by claim 7 or 8, **characterized in that** the travel direction indicator is coupled with a tone generator.

## Revendications

1. Procédé pour contrôler l'entrée/la sortie de stationnement dans le cas de véhicules, présentant les étapes suivantes :
- enregistrement d'un angle de braquage réel ;
- détection d'obstacles se trouvant dans un environnement du véhicule ;
- calcul d'une voie de roulement réelle du véhicule sur la base de l'angle de braquage réel ;
- calcul d'une voie de roulement prévue pour le véhicule sur la base des obstacles détectés ;
- détermination d'un angle de braquage prévu pour la voie de roulement prévue ;
- affichage d'une différence réelle entre l'angle de braquage réel et l'angle de braquage prévu pour l'amorçage de manoeuvres de roulement et de braquage nécessaires pour l'alignement de l'angle de braquage réel sur l'angle de braquage prévu ;
**caractérisé en ce que** la différence entre l'angle de braquage réel et l'angle de braquage prévu est affichée par un clignotement, dont la fréquence varie en fonction de la grandeur de la différence.

2. Procédé selon la revendication 1, **caractérisé en ce qu'**aucun clignotement n'apparaît plus en cas de concordance entre l'angle de braquage réel et l'angle de braquage prévu.

3. Procédé selon la revendication 1 ou 2, **caractérisé en ce que** la fréquence de clignotement augmente lorsque la différence-entre l'angle de braquage réel et l'angle de braquage prévu augmente.

4. Procédé selon la revendication 1 ou 2, **caractérisé en ce que** la fréquence de clignotement diminue lorsque la différence entre l'angle de braquage réel et l'angle de braquage prévu augmente.

5. Procédé selon l'une quelconque des revendications précédentes, **caractérisé en ce que** le clignotement est accompagné d'un signal sonore intermittent.

6. Procédé selon la revendication 5, **caractérisé en ce que** la fréquence du signal sonore est en corrélation avec la fréquence de clignotement.

7. Aide à l'entrée de stationnement pour les véhicules automobiles, comprenant
- un dispositif pour l'enregistrement de l'angle de braquage réel ;
- un dispositif pour la détection d'obstacles se trouvant dans un environnement du véhicule ;
- un dispositif de réglage pour l'analyse des données enregistrées et pour le calcul d'un angle de braquage prévu ; et
- un dispositif d'affichage pour l'affichage d'une différence entre l'angle de braquage réel et l'angle de braquage prévu ;
**caractérisé en ce qu'**un indicateur de direction se trouvant dans le panneau d'instruments du véhicule indique la différence par le clignotement dans une fréquence variable en fonction de la différence.

8. Aide à l'entrée de stationnement selon la revendication 7, **caractérisé en que** l'indicateur de direction clignote dans une couleur autre que la couleur qui est indiquée lors d'un changement de direction normal du véhicule.

9. Aide à l'entrée de stationnement selon la revendication 7 ou 8, **caractérisée en ce que** l'indicateur de direction est couplé avec un dispositif générateur de son.
